# EUROPEAN PATENT SPECIFICATION

(11) **EP 2 262 316 B1**
(45) Date of publication and mention of the grant of the patent: **18.01.2012**
(21) Application number: 09360032.8
(22) Date of filing: 08.06.2009
(51) Int. Cl.: H04W 36/08

(54) **Handover control**
Weiterreichungssteuerung
Contrôle de transfert

(43) Date of publication of application: 15.12.2010
(73) Proprietor: Alcatel Lucent, 75008 Paris (FR)
(72) Inventor: Sapiano, Philip Charles, Corsham Wiltshire SN13 9AY (GB); Brend, Graham, Bath BA1 7UE (GB); Bradley, Nigel L., Cricklade SN6 6LT (GB); Putman, Anthony Edward, Chippenham Wiltshire SN15 5AQ (GB)
(74) Representative: Sarup, David Alexander

(56) References cited:
- EP-A- 1 594 327
- WO-A-2009/006041
- GB-A- 2 443 236
- US-A1- 2008 305 801
- US-A1- 2009 097 451

## Description

### FIELD OF THE INVENTION

The present invention relates to a method of identifying femto base station handover targets for user equipment in a wireless communications network, a computer program product and a femto base station gateway.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within a macro cell. Cells that are smaller than macrocells are sometimes referred to as microcells, picocells, or femtocells, but we use the term femto cells generically for cells that are smaller than macrocells. One way to establish a femto cell (sometimes referred to as a home cell) is to provide a femto base station (or home base station) that provides coverage having a relatively limited range within the coverage area of a macro cell. The transmission power of a femto base station is relatively low and, hence, each femto cell provides a small coverage area compared to that of a macro cell and covers, for example, an office or a home.

Such femto cells are typically provided where the communications coverage provided by the macro cell is poor or where a user wishes to use an alternative communications link provided locally, by the femto base station, to communicate with the core network. Such a situation might arise where, for example, a user has a pre-existing communications link and the user wishes to utilise that link in preference to that provided by a macro cell network provider to communicate with the core network.

US 2008/0305801 A1 discloses a method of hand-off of a CDMA access mobile from a macro cell to a femto cell. Each femto cell which mobile stations have allowed access is tracked using a mobile station identification for each of the mobile stations.

US 2009/0097451 A1 discloses a technique for identification of an access point to which an access terminal is to be handed-off. An access terminal may receive a signal having an identified characteristic from an access point. Each access point of a set of access points associated with the identified characteristics may be directed to attempt to decode the signal from the access terminal. The access point of the candidate set to use for the hand-off operation may then be determined based on the signal received from the access terminal, if any, by each of the candidate access points.

EP 1 594 327 A 1 discloses an apparatus and method for cell selection in a mobile communication system. A list of candidate cells are assembled prior to selection. The list might comprise cells which are not the serving cell or which are outside the active set, for example a network-preferred cell or cells neighbouring the serving cell or cells of the active cell.

WO 2009/006041 A 1 discloses a technique for relocation in a cellular communication system. An underlying cell is defined from a cell identifier including a location area code and a scrambling code. A home location area code of a home underlay cell for a mobile station is received. A received relocation message includes the target cell identifier and a remote station identifier. Potential target base stations for the relocation request are determined. A target base station to hand into is selected in response to the remote station identifier and the scrambling code identifier and location area code of the target cell identification.

GB 2 443 236 A discloses scrambling code assignment in a cellular communication system. A scrambling code unit comprises a subset processor which divides the set of scrambling codes assigned to the underlay cells into distinct subsets. A scrambling code group processor assigns a scrambling code group comprising a plurality of scrambling codes to underlay cells within a region. Each group is a unique group within the region and comprises one scrambling code from each of the subsets. A base station for each of the underlay cells is arranged to transmit a pilot signal on each scrambling code of the group assigned to the underlay cell. Measurements by a remote station may detect specific scrambling codes within each subset, thereby allowing a detection of an underlay cell while using a reduced number of scrambling codes.

In order to maintain a high level of service to the end user, with minimal service interruption, it may be necessary to handover the user equipment from the macro cell within which it is located to a femto base station. Likewise, it may be necessary to handover the user equipment from one femto base station to another. However, there may be typically tens of thousands of femto base stations which may be deployed within a network under one controller. This presents a problem of identifying which femto base station to handover the user equipment to.

Accordingly, it is desired to provide an improved technique to enable handover to occur efficiently.

### SUMMARY

According to a first aspect of the present invention, there is provided a method of identifying femto base station handover targets for user equipment in a wireless communications network, as claimed in claim 1.

The first aspect recognises that one problem with the deployment of femto cells is that the number of primary scrambling codes which can be allocated to the femto base stations is limited and, typically, will be between 6 and 16 different available primary scrambling codes. The selection of a primary scrambling code will typically be auto-configured by the femto base stations themselves, based on measurements of other primary scrambling codes used in their vicinity. Therefore, in a typical femto cell deployment, these primary scrambling codes will need to be heavily reused and this presents a problem for the handover of a call from the macro base station to a femto base station or between femto base stations, as will now be explained in more detail. As the user equipment notices that the quality of its established signal degrades, the user equipment may search for other base stations and may generate a measurement report indicating that a neighbouring femto base station provides a much better quality signal and is therefore a potential handover target. There will be the need, therefore, to attempt to communicate with the target femto base station via the core network to indicate that handover to that target femto base station is required. The measurement report may include a distinguishing characteristic of the femto base station handover target, such as its primary scrambling code, to help identify it. However, it is likely that as the number of femto base stations increases, the number of femto base stations having the same distinguishing characteristics increases, each of which would therefore need to be prepared as a potential handover target. However, it will be appreciated that such an approach is extremely wasteful of resources and may soon become unmanageable as the number of deployed femto base stations and user equipment increases.

However, the first aspect also recognises that it is likely that user equipment may regularly roam to the same locations time after time, and they may therefore regularly require to handover to the same femto base stations. Accordingly, location history information may be stored which identifies those femto base stations which have previously been visited by user equipment. It will be appreciated that user equipment may previously visit a femto base station as a result of an earlier camping or handover event. When an indication is then subsequently received which identifies a base station as a potential handover target then this location history information may be interrogated to help identify whether the user equipment has previously visited femto base stations having the same identifying indicator and, if so, there may be an increased likelihood that one of those previously-visited femto base stations is the identified handover target. Hence, it can be seen that by using information identifying previously visited base stations, the number of potential handover targets can be dramatically reduced which in turn reduces the likelihood of an unsuccessful handover occurring and reduces the number of femto base stations which need to be unnecessarily prepared.

Each femto base station may have associated therewith a primary scrambling code identifier and a unique identifier, and every femto base station visited by a user equipment may then be associated with that user equipment. The user equipment may provide the primary scrambling code of the target femto base station as part of its standard measurement report and this information may then be utilised to help identify the unique identifier of the likely handover targets. Accordingly, it can be seen that existing infrastructure and information already obtained and communicated throughout the network may be utilised to help better identify the handover candidates.

A neighbour list may be provided which indicates which femto base stations neighbour other femto base stations. From this information, it will be appreciated that it is possible to determine whether there is a femto base station having a matching primary scrambling code which immediately neighbours the base station which is currently supporting the user equipment. If there is a match, then there is a strong likelihood that that neighbouring femto base station is the handover target. If there is no matching femto base station, then the neighbours of the neighbours of the current base station supporting the user equipment may be investigated to see if a match occurs, and so on. Again, it will be appreciated that this helps to minimise the number of femto base stations which may need to be prepared unnecessarily.

The extent of the search for neighbour matches may be based on a neighbour area. The size of the neighbour area from the most recently visited femto base station may be adjusted based on the time elapsed between the time when the current indication of a potential handover target was received from the user equipment and the time when a femto base station was most recently visited by that user equipment.

In one embodiment, said location history information comprises an indication of how often user equipment has previously visited femto base stations and said step of correlating comprises: correlating said primary scrambling code identifier detected by said user equipment against said primary scrambling code identifiers stored in said location history information for that user equipment to identify those femto base stations having a matching primary scrambling code which have been visited most often as handover candidates. Accordingly, the location history information may also identify the frequency with which a femto base station is visited by user equipment. The femto base stations visited most frequently by the user equipment may be more likely to be handover candidates and so those femto base stations which have a matching primary scrambling code and which are visited most often may be identified as the most likely handover candidates. In this way, it can be seen that the number of handover candidates can be further reduced since those visited least often may avoid needing to be prepared for handover.

In one embodiment, said step of correlating comprises: correlating said primary scrambling code identifier detected by said user equipment against said primary scrambling code identifiers stored in said location history information for that user equipment to identify that femto base station having a matching primary scrambling code which has been visited most often as a handover candidate. Hence, in order to reduce the number of femto base stations which are prepared for handover, only the femto base station having matching primary scrambling code which is visited the most often may be identified as a handover target.

In one embodiment, said location history information comprises an indication of when user equipment has previously visited femto base stations and said step of correlating comprises: correlating said primary scrambling code identifier detected by said user equipment against said primary scrambling code identifiers stored in said location history information for that user equipment to identify those femto base stations having a matching primary scrambling code which have been visited most recently as handover candidates.

Accordingly, an indication of how recently the user equipment has visited each femto base station may be provided. It will be appreciated that those femto base stations which have been most recently visited may well have an increased likelihood of being visited again in the future. Accordingly, those femto base stations which have a matching primary scrambling code and which were visited most recently may be identified as handover candidates. This helps reduce the number of femto base stations which need to be prepared for handover since those femto base stations which have a matching primary scrambling code but which have not been visited recently may be excluded as a handover candidate since it may be unlikely that those femto base stations are the actual handover candidates. It will be appreciated that this may avoid preparing femto base stations for handover unnecessarily.

In one embodiment, said step of correlating comprises: correlating said primary scrambling code identifier detected by said user equipment against said primary scrambling code identifiers stored in said location history information for that user equipment to identify that femto base station having a matching primary scrambling code which has been visited most recently as a handover candidate. Accordingly, in order to reduce the number of base stations to be prepared to a minimum, that femto base station having a matching primary scrambling code and which was visited most recently may be identified as the handover candidate. It will be appreciated that this minimises the number of handover candidates that need to be prepared to just one.

In one embodiment, said location history information comprises femto base station topology information providing an indication of location relationships between femto base stations and said step of correlating comprises: correlating said primary scrambling code identifier detected by said user equipment with said primary scrambling code identifiers stored in said location history information for that user equipment to identify those femto base stations having a matching primary scrambling code which are located closest to said user equipment as handover candidates. Accordingly, topology information may also be included in order to provide an indication of the geographic relationship between base stations. This topology information may then be utilised in order to further reduce the number of femto base stations that need to be prepared for handover. On receipt of a primary scrambling code, the topology information may be interrogated to determine those femto base stations which have a matching primary scrambling code and which are located closest to the current location of the user equipment, which is derivable from the base station which is currently supporting that user equipment. Only those femto base stations having a matching primary scrambling code which are closest to the user equipment may need be to prepared, which again may avoid preparing femto base stations for handover unnecessarily.

In one embodiment, said step of correlating comprises: correlating said primary scrambling code identifier detected by said user equipment with said primary scrambling code identifiers stored for that user equipment to identify that femto base station having a matching primary scrambling code which is identified as a neighbour to that femto base station most recently visited by said user equipment as a handover candidate.

In one embodiment, said step of correlating comprises: setting said neighbour area in proportion to said time elapsed. Accordingly, the size of the neighbour area may be adjusted proportionately, based on the time which has elapsed between receiving the indication that a handover is required and the time at which the most recently visited femto base station was visited by that user equipment. It will be appreciated that if very little time has elapsed between the most recent visit to a femto base station and the receipt of the current indication, then the user equipment may be still close to the vicinity of the most recently visited femto base station, in which case the neighbour area would need to be relatively small, such as being only the immediate neighbours of the most recently visited femto base station. However, if a large amount of time has elapsed between the most recent visit to a femto base station and the receipt of the current indication, then there is a strong likelihood that the user equipment may no longer be close to the vicinity of the most recently visited femto base station, in which case the neighbour area would need to be large, such as being only the neighbours of the neighbours of the most recently visited femto base station. It will be appreciated that a situation might arise where the time elapsed is too large that this approach may provide no useful purpose in narrowing down the search area and potential handover targets.

In one embodiment, said step of correlating comprises: setting said neighbour area in proportion to a time elapsed between each previous visit to a femto base station for that user equipment indicated by said location history information. Accordingly, more than one elapsed time period may be used to determine the size of a search area. If the historic location information indicates that there is a relatively large period of time which elapses between visits to femto base stations, then even if a similarly large time has elapsed between receiving the current indication and the time when the most recently visited femto base station occurred, then a smaller neighbour area may be selected than may otherwise be considered appropriate. Conversely, if the historic location information indicates that the user equipment changes location frequently, then even if a relatively small period has elapsed it may be appropriate to use a larger neighbour area than may otherwise be considered appropriate.

According to a second aspect, there is provided a computer programme product operable, when executed on a computer, to perform the method steps of the first aspect.

According to a third aspect of the present invention, there is provided a femto base station gateway, as claimed in claim 11.

In one embodiment, said location history information comprises an indication of how often user equipment has previously visited femto base stations and said correlation logic is operable to correlate said primary scrambling code identifier detected by said user equipment against said primary scrambling code identifiers stored in said location history information for that user equipment to identify those femto base stations having a matching primary scrambling code which have been visited most often as handover candidates.

In one embodiment, said correlation logic is operable to correlate said primary scrambling code identifier detected by said user equipment against said primary scrambling code identifiers stored in said location history information for that user equipment to identify that femto base station having a matching primary scrambling code which has been visited most often as a handover candidate.

In one embodiment, said location history information comprises an indication of when user equipment has previously visited femto base stations and said correlation logic is operable to correlate said primary scrambling code identifier detected by said user equipment against said primary scrambling code identifiers stored in said location history information for that user equipment to identify those femto base stations having a matching primary scrambling code which have been visited most recently as handover candidates.

In one embodiment, said correlation logic is operable to correlate said primary scrambling code identifier detected by said user equipment against said primary scrambling code identifiers stored in said location history information for that user equipment to identify that femto base station having a matching primary scrambling code which has been visited most recently as a handover candidate.

In one embodiment, said location history information comprises femto base station topology information providing an indication of location relationships between femto base stations and said correlation logic is operable to correlate said primary scrambling code identifier detected by said user equipment with said primary scrambling code identifiers stored in said location history information for that user equipment to identify those femto base stations having a matching primary scrambling code which are located closest to said user equipment as handover candidates.

In one embodiment, said correlation logic is operable to correlate said primary scrambling code identifier detected by said user equipment with said primary scrambling code identifiers stored for that user equipment to identify that femto base station having a matching primary scrambling code which is identified as a neighbour to that femto base station most recently visited by said user equipment as a handover candidate.

In one embodiment, said correlation logic is operable to set said neighbour area in proportion to said time elapsed.

In one embodiment, said correlation logic is operable to set said neighbour area in proportion to a time elapsed between each previous visit to a femto base station for that user equipment indicated by said location history information.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates a general deployment within one macro cell shown in Figure 1;
Figure 3 shows schematically components of the femto cell controller/gateway shown in Figure 1;
Figure 4 shows schematically the contents of the user equipments history table and topology map shown in Figure 3;
Figure 5 is schematic diagram illustrating the operation of a pre-release 8 user equipment when attaching to a femto base station which causes information to be stored in the user equipment history table illustrated in Figure 4;
Figure 6 illustrates a release 8 user equipment attaching to a femto base station which causes information to be stored in the user equipment history table illustrated in Figure 4;
Figure 7 illustrates an example situation where user equipment is to handover to a femto base station according to one embodiment;
Figure 8 illustrates a handover procedure according to one embodiment; and
Figure 9 illustrates the main processing steps undertaken by the femto gateway when determining a handover target femto base station according to one embodiment.

### DESCRIPTION OF THE EMBODIMENTS

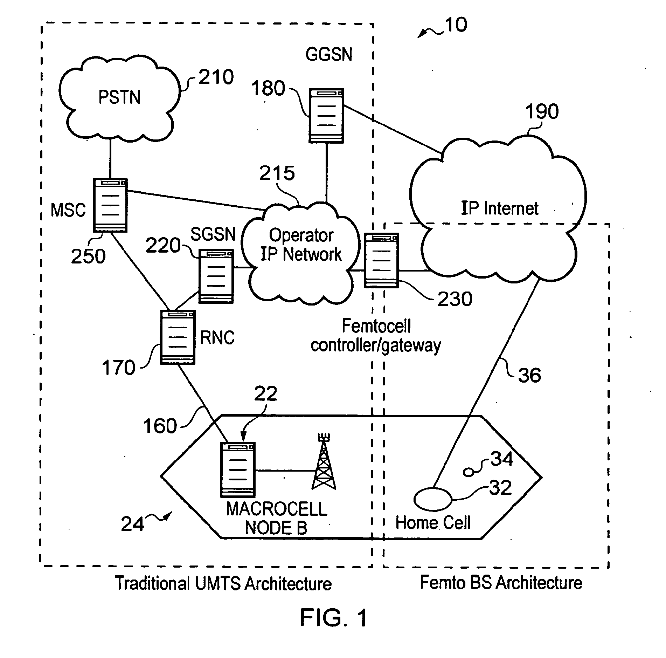

Figure 1 illustrates a wireless communication network, generally 10, according to one embodiment. User equipment 34 roam through the wireless communication network 10. Base stations 22 are provided which support respective macro cells 24. A number of such base stations are provided, which are distributed geographically in order to provide a wide area of coverage to the user equipment 34. When user equipment 34 is within a macro cell 24 supported by the base station 22 then communications may be established between the user equipment 34 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by a radio network controller 170. The radio network controller 170 controls the operation of the wireless communications network 10 by communicating with the base stations 22 over a backhaul communications link 160. The network controller 170 also communicates with the user equipment 34 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates via a operator IP network 215 with serving general packet radio service support nodes (SGSNs) 220 and a gateway general packet radio support node (GGSN) 180. The GGSN then communicates with a packet-switch core 190 such as, for example, the Internet.

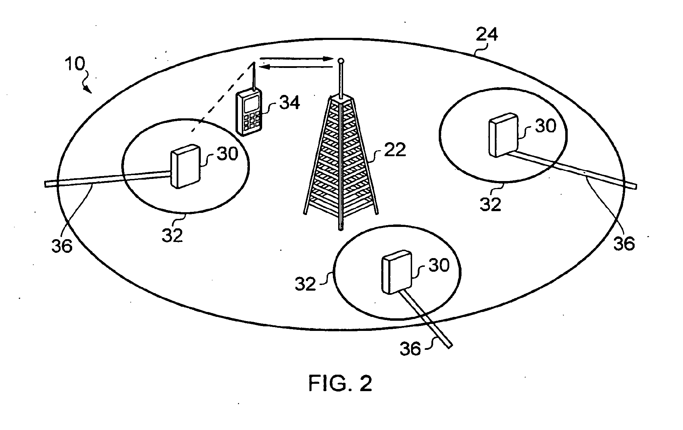

As shown in more detail in Figure 2, there are provided a number of femto cell base stations 30 (sometimes referred to as home base stations), each of which provides a femto cell 32 (or home cell) in the vicinity of a building within which the associated femto cell base station is installed. The femto cells 32 provide local communications coverage for a user in the vicinity of those buildings. Each femto cell base station 30 communicates via a femto cell controller/gateway 230. A handover or camping event is initiated between the base station 22 and the femto cell base stations 30 when the user equipment 34 provides a measurement report to the macro base station 22 which indicates that a femto base station 30 is within range. The femto cell base stations 30 typically utilise the user's broadband Internet connection 36 (such as ADSL, Cable, Ethernet, etc.) as a backhaul.

Femto cell base stations 30 are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations 30 are provided locally by customers. Such femto cell base stations 30 provide local coverage in areas of the macro network where quality of service may be low. Hence, the femto cell base stations 30 provide for improved quality of service in areas which are difficult for network operators. To reduce the cost of the femto base stations 30 and to reduce complexity and interference effects of the femto cell 32 on other user equipment within the macro cell, the transmission power of the femto cell base station 30 is relatively low in order to restrict the size of the femto cell 32 to a range of tens of metres or less. The femto cell base stations 30 have extensive autoconfiguration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

Each femto base station 30 will typically have functionality to control which user equipment 34 may access to that femto base station 30. A closed access femto base station will only allow access to those user equipment who have been indicated (for example using the user equipment's International Mobile Subscriber Identity (IMSI)) as being registered with that femto base station, whereas an open access femto base station allows access to all user equipment.

The number of primary scrambling codes which can be allocated to a femto base station 30 is limited. In many implementations, the number of available primary scrambling codes will be less than 20 and most typically will be between 6 and 16. However, the total number of available primary scrambling codes will vary from implementation to implementation and may be more or less than these illustrative numbers. These primary scrambling codes typically are auto-configured by the femto base stations 30 based on measurements of surrounding primary scrambling codes used. Therefore, in typical femto base station deployments, the primary scrambling codes may need to be heavily reused which means that many femto base stations 30 may be using the same primary scrambling code within a macro cell 24 coverage area.

Before describing the embodiments in any more detail, a brief overview will now be provided. When performing a handover to a femto base station 30, it is necessary to try to identify that target femto base station (the base station to which the user equipment needs to be handed off to) as accurately as possible. In an ideal implementation, each femto base station 30 would be uniquely identifiable. However, even it were possible to uniquely identify every femto base station 30 deployed in the network 10, currently no provision exists to enable user equipment 34 to detect such unique identifications or to communicate that information through the network 10 back to the femto controller/gateway 230 (which acts as the radio network controller for the femto base stations) to enable the handover to occur. Accordingly, the existing functionality of the user equipment 34, macro base stations 22 and intervening infrastructure to the femto controller/gateway 230 needs to be utilised in a way that enables the target femto base station to be identified.

However, various existing functionality exists in both 2G and 3G networks which can be enhanced to help identify and facilitate the handover to a target femto base station 30. This enhanced functionality utilises signalling information which indicates when user equipment 34 is attached to femto base stations 30 within the network 10. This information gives information about the historic locations of the user equipment 34 within the network 10. Such historic information may then be utilised to better inform the likely current location of the user equipment 34 in order to reduce the number of target femto base stations 30 that need to be considered when performing a handover. As the amount of historic information grows, a better assessment of the likely location of the user equipment 34 can be made and so a more accurate assessment of the likely handover target can also be made. For example, historic information may be compiled which identifies those femto base stations 30 which user equipment 34 has been attached to or visited historically, when they were last attached or last visited and the number of times which they have been attached or visited. This information can be used by the femto controller/gateway 230 to narrow down the likely target femto base stations either based on the last known femto base station visited or attached to by the user equipment 34 and/or a ranking of femto base stations based on the frequency that the user equipment 34 has visited these femto base stations in the past. Therefore, the femto controller/gateway 230 can employ some intelligence to determine the most likely femto base station that the user equipment 34 wishes to hand over to and, hence, can forward the handover request to that femto base station. In addition, information relating to the topology of the network can also be stored so that if the user equipment 34 reports that it desires to handover to a femto base station with a primary scrambling code that does not match any that the femto controller/gateway 230 has determined that the user equipment 34 has previously visited, the gateway can utilise knowledge about the topology of the network to determine whether the user equipment 34 is trying to handover to a femto base station that neighbours a femto base station visited by the user equipment 34. Accordingly, it can be seen that the number of target base stations for handover can be significantly reduced, thereby improving the likelihood that a handover will complete successfully and reducing the unnecessary use of resources to prepare base stations other than the intended handover target.

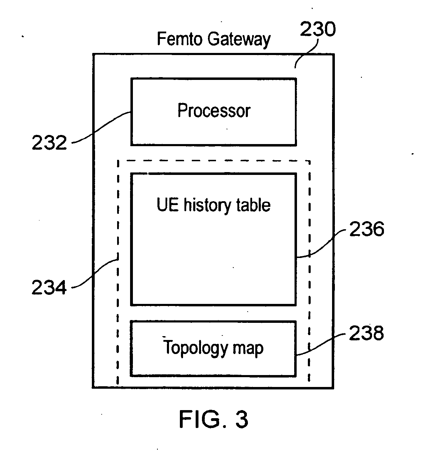

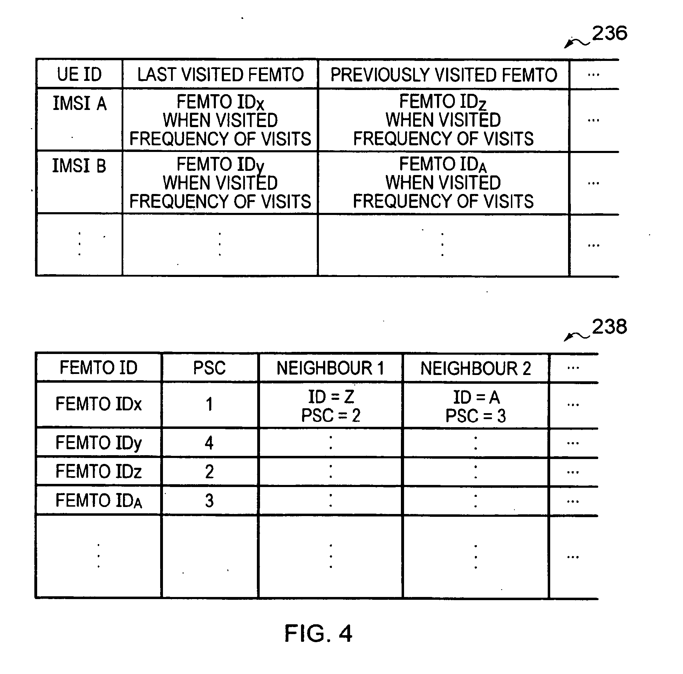

Figure 3 illustrates the main components of the femto gateway/controller 230 according to one embodiment. The femto gateway/controller 230 is provided with a processor 232 and associated storage 234. The storage 234 stores a user equipment history table 236 and a topology map 238. The user equipment history table 236 identifies those femto base stations to which the user equipment has been previously attached, and which will be described in more detail with reference to Figure 4 below. The topology map 238 maintains information relating to each femto base station within the network, together with its primary scrambling code and unique identifier. Optionally, the primary scrambling codes and unique identifiers of its neighbours may also be maintained, as will also be described in more detail with reference to Figure 4 below.

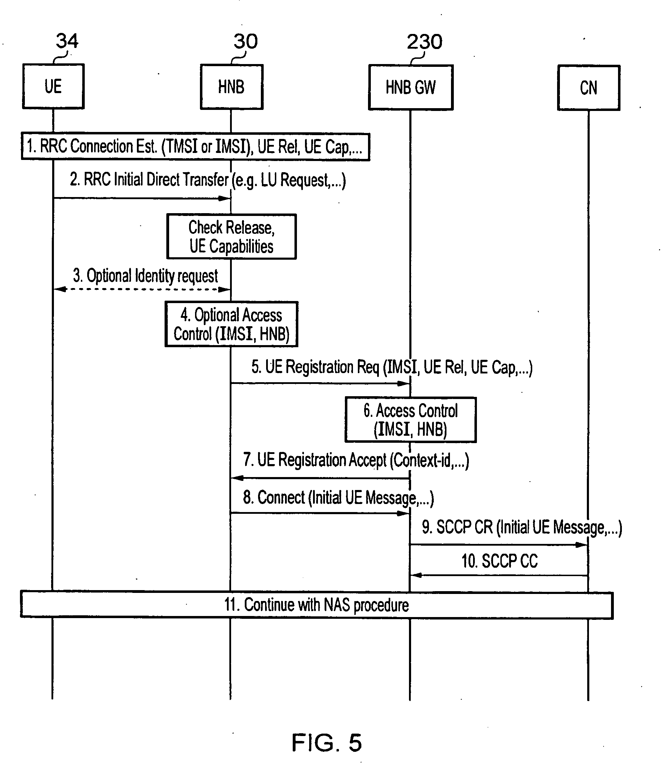

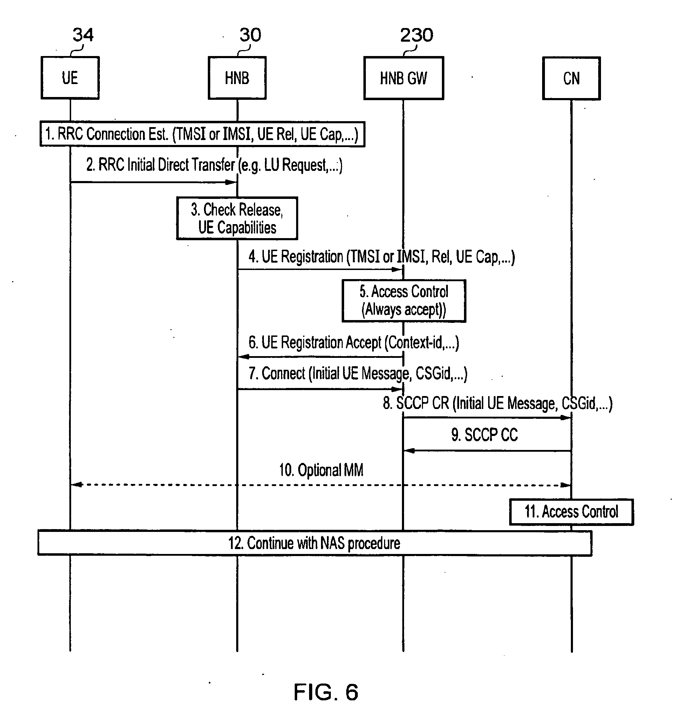

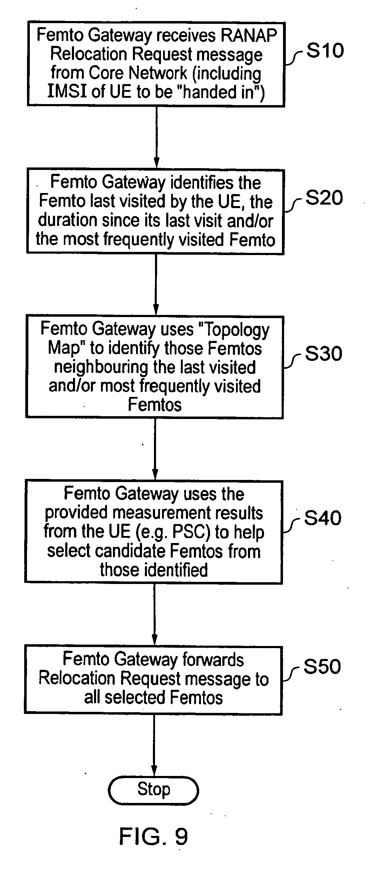

The user equipment history table 236 is constantly updated to reflect the roaming activities of the user equipment 34. Details of how this roaming information is communicated to the user equipment history table 236 are explained in more detail with reference to Figures 5 and 6 below. Likewise, the topology map 238 is maintained to reflect additions, removals or movements of femto base stations from within the network 10. The processor 232, upon receipt of information identifying a handover target interrogates the user equipment history table 234 and optionally the topology map 238 to identify a reduced subset of matching femto base station handover targets, as will be described in more detail with reference to Figure 9 below.

Figure 4 illustrates the arrangement of the user equipment history table 236 and the topology map 238 in more detail. As can be seen, the user equipment history table 236 is indexed using the user equipment's IMSI as a user equipment unique identifier. Each user equipment 34 within the network 10 will be provided with its own entry. For each IMSI entry, details of the last visited femto base station, together with details of any previously visited femto base stations are maintained. Accordingly, each entry includes a femto base station identifier (typically, the cell ID of the femto cell 32 supported by the femto base station 30), an indication of when that femto base station was last visited, together with details of the number of times that that femto base station has been visited. As can be seen, it is therefore possible to identify all those femto base stations that any particular user equipment has visited within the network 10. It is possible to identify the most recently visited femto base stations, as well as those femto base stations most frequently visited. This information is utilised by the femto gateway/controller 230 when identifying a handover target. Of course, it will be appreciated that the exact arrangement of the user equipment history table 236 may vary from implementation to implementation, dependant upon the relative numbers of femto base stations to user equipment.

The topology map 238 maintains a neighbour list for femto bases stations within the network 10. The topology map 238 is indexed using a femto base station unique identifier (typically, the cell ID of the femto cell 32 supported by the femto base station 30). For each femto base station within the topology map 238, an entry map is made to indicate its primary scrambling code, together with entries for every unique identifier and primary scrambling code of neighbouring femto base stations. It will be appreciated that this information may be generated either by central provisioning from the core network which may hold information regarding the topology of the network or from the reports received detailing neighbours detected either by femto base stations themselves or reported by user equipment 34. Again, this information is utilised to help narrow the number of potential handover targets, as will be described in more detail below with reference to Figure 9.

The mechanisms used to populate the user equipment history table 236 will now be described in more detail.

Figure 5 illustrates the operation of a pre-release 8 user equipment when attaching to a femto base station, which subsequently registers the user equipment to the femto gateway/controller 230 as defined in the 3GPP "UTRAN Architecture for 3G Home Node B Stage 2" specification (25.467). As can be seen, the femto base station provides, at step 5, the IMSI of the user equipment to the femto base gateway/controller 230. This information can be correlated with the cell ID of the femto cell supported by that femto base station and the cell ID of the femto cell supported by that femto base station can then be added to the user equipment history table 234 at the appropriate entry for that IMSI. The entry will also include information about when the registration occurred and the number of visits for that femto bases station will be Incremented.

Likewise, Figure 6 shows the operation of a release 8 user equipment when attaching to a femto base station, which subsequently registers the user equipment to the femto gateway/controller 230 as defined in the 3GPP "UTRAN Architecture for 3G Home Node B Stage 2" specification (25.467). In this case, the user equipment may pass its IMSI to the network. If this does occur, then the IMSI can be obtained from the core network as part of a Radio Access Network Application Part Protocol (RANAP) common ID procedure, which is part of step 12 in the sequence. Once again, this information can be correlated with the cell ID of the femto cell supported by that femto base station and the cell ID of the femto cell supported by that femto base station can then be added to the user equipment history table 234 at the appropriate entry for that IMSI. The entry will also include information about when the registration occurred and the number of visits for that femto bases station will be incremented.

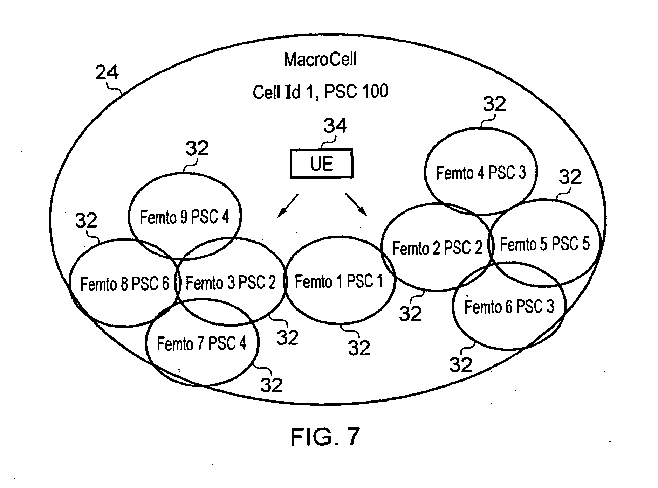

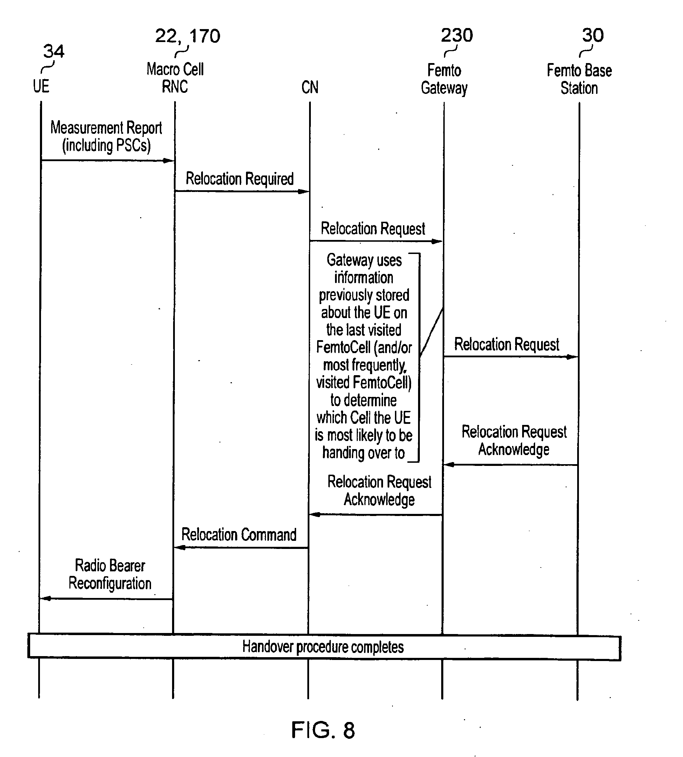

Figure 7 illustrates in more detail an example arrangement of femto cells 32 within a macro cell 24. As can be seen, many femto cells 32 are distributed through the macro cell 24. Of course, it will be appreciated that this is a schematic diagram ahd is not to scale since many more femto cells 32 may be deployed within a macro cell 24 than those illustrated. As can be seen, user equipment 34 is moving within the macro cell 24 towards a femto cell 32. As the user equipment 34 detects that a better signal is being received from a femto cell 32 than from the macro cell 24 a handover procedure is initiated as shown in Figure 8. The efficient determination of the target femto cell for a handover procedure is an important requirement in maintaining a high quality of service to the user equipment 34, since any interruption to an ongoing session with the user equipment 34 needs to be minimised. When handling an incoming handover request from a macro base station 22, the femto gateway/controller 230 needs to be able to determine which femto base station 30 the user equipment 34 is handing over to. However, existing standard messages do not provide.a mechanism for the macro base station 22 to uniquely identify the femto base station 30 as the user equipment 34 will not report the cell ID of the detected femto cell 32 (supported by the target femto base station 30) in measurement reports to the macro base station 22. However, the user equipment 34 can report in its measurement reports the primary scrambling code of the detected femto cell 32 (supported by the target femto base station 30). However, when primary scrambling codes are reused, the femto gateway/controller 230 cannot rely on the reported value of the target primary scrambling code to uniquely identify just one femto base station 30. Accordingly, it is likely that the femto gateway/controller 230 will not be able to uniquely determine the target femto base station from the information provided by the user equipment 34 alone. This makes it difficult for the femto gateway/controller 230 to decide which femto base station 30 the handover request should be forwarded to.

In the example shown in Figure 7, the user equipment 34 is moving towards a femto cell 32. The user equipment 34 will therefore indicate to the network that a handover should be performed with the detected femto base station and will include the primary scrambling code of the detected femto cell 32 in its measurement report. When the femto gateway/controller 230 receives the handover request, it will need to determine which is the target femto base station and forward the request to it. However, if the femto gateway/controller 230 just relies on the primary scrambling code measured and reported by the user equipment 34 (in this example the measurement report indicates a primary scrambling code 2), it cannot determine whether the user equipment 34 is moving towards femto 2 or femto 3.

Accordingly, as shown in Figure 8, the femto gateway/controller 230 upon receipt of the relocation request utilises information stored in the user equipment history table 236 and the topology map 238 to determine which femto base station or base stations are the most likely handover targets, as will be described in more detail below with reference to Figure 9. After determining the most likely target or targets, the relocation request is forwarded to that or those femto base stations, the relocation process completes and handover occurs in a conventional manner.

Figure 9 illustrates the main processing steps of the processor 232 within the femto gateway/controller 230 on receipt of the relocation request message.

At step S10, the femto gateway/controller 230 receives the relocation request message from the core network. The relocation request message includes the IMSI of the user equipment 34. In addition, the RANAP relocation request includes the measurement report generated by the user equipment 34 and sent to the macro network, which includes the primary scrambling code of the handover target cell.

At step S20, the femto gateway/controller 230 interrogates the user equipment history table 236 and determines the identity of the femto base station most recently visited by the user equipment 34, establishes the time that has elapsed since visiting that femto base station and/or determines the femto base station which is most regularly visited by that user equipment 34.

At step S30, the processor 232 interrogates the topology map 238 to optionally identify those femto base stations which neighbour the last visited femto and/or the most frequently visited femto base stations. The extent of the neighbours identified is based on a neighbour area which is set by examining the time which has elapsed between receiving the relocation request and an assessment of how frequently the user equipment moves. For example, an assessment is made of the time elapsed between the receipt of the relocation request message and the time when the last femto base station was visited. The neighbour area is set in proportion to that time such if a large amount of time has elapsed, then a large neighbour area may be set, whereas if a short period has elapsed, then a small neighbour area may be set. However, if it is clear from the entries that the user equipment moves frequently, then the neighbour area may be set to be smaller than that which would be set for user equipment which moves less frequently. A small neighbour area may include only the immediate neighbours of the femto base stations identified at step S20, whereas a larger neighbour area may also include neighbours of their neighbours, and so on.

At step S40, the processor 232 interrogates the topology map 238 to determine whether any of the identified femto base stations have a primary scrambling code which matches that of the handover target cell provided within the measurement report included in the RANAP relocation request. The cell IDs of the femto cells supported by those matching femto base stations is then determined from the topology map 238.

At step S50, the femto gateway/controller 230 then prepares the matching femto base stations for handover.

Accordingly, it can be seen that a technique is provided which uses information available to the femto gateway/controller 230 to reduce the number of target femto base stations that it needs to consider when handling an incoming handover. Whenever a user equipment attaches to a femto cell, the gateway receives and maintains information about this event. When a handover request is sent from the macro network to the femto gateway/controller 230 the user equipment's IMSI can be provided and, hence, the femto gateway/controller 230 can associate the user equipment initiating handover request with information previously stored about that user equipment, for example, which femto base station the user equipment was last attached to. This information can be used by the femto gateway/controller 230 to narrow down the candidate target femto base stations either based on the last known femto base station visited by the user equipment and/or a ranking of the femto base stations base on the frequency that the user equipment has visited these femto base stations in the past. In the event that none of the identified femto base stations have a matching primary scrambling code, the femto gateway/controller 230 may utilise knowledge of the femto cell topology to determine whether a neighbour of the identified femto base stations have a matching primary scrambling code. In this way, it can be seen that there is a reduced probability of dropped call through non-identification of the femto base station handover target and resources wasted through the unnecessary preparation of a large number of femto base stations are minimised.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of identifying femto base station handover targets (30) for user equipment (34) in a wireless communications network (10), said method comprising the steps of:
storing location history information identifying femto base stations previously visited by user equipment, said location history information comprising a primary scrambling code identifier, a unique identifier for each femto base station which identifies those femto base stations previously visited by user equipment and femto base station neighbour information providing an indication of femto base station neighbours;
receiving an indicator from user equipment identifying a detected femto base station as a handover target, said indicator comprising a primary scrambling code identifier detected by said user equipment; and
correlating said primary scrambling code identifier detected by said user equipment with said primary scrambling code identifiers stored for said user equipment to identify as handover candidates those femto base stations having a matching primary scrambling code which are indicated by said femto base station neighbour information as being within a neighbour area determined based on a time elapsed between receiving said indicator and when said user equipment has previously visited a most recently visited femto base station.

2. The method of claim 1, wherein said location history information comprises an indication of how often user equipment has previously visited femto base stations and said step of correlating comprises:
correlating said primary scrambling code identifier detected by said user equipment against said primary scrambling code identifiers stored in said location history information for that user equipment to identify those femto base stations having a matching primary scrambling code which have been visited most often as handover candidates.

3. The method of claim 2, wherein said step of correlating comprises:
correlating said primary scrambling code identifier detected by said user equipment against.said primary scrambling code identifiers stored in said location history information for that user equipment to identify that femto base station having a matching primary scrambling code which has been visited most often as a handover candidate.

4. The method of any preceding claim, wherein said location history information comprises an indication of when user equipment has previously visited femto base stations and said step of correlating comprises:
correlating said primary scrambling code identifier detected by said user equipment against said primary scrambling code identifiers stored in said location history information for that user equipment to identify those femto base stations having a matching primary scrambling code which have been visited most recently as handover candidates.

5. The method of claim 4, wherein said step of correlating comprises:
correlating said primary scrambling code identifier detected by said user equipment against said primary scrambling code identifiers stored in said location history information for that user equipment to identify that femto base station having a matching primary scrambling code which has been visited most recently as a handover candidate.

6. The method of any preceding claim, wherein said location history information comprises femto base station topology information providing an indication of location relationships between femto base stations and said step of correlating comprises:
correlating said primary scrambling code identifier detected by said user equipment with said primary scrambling code identifiers stored in said location history information for that user equipment to identify those femto base stations having a matching primary scrambling code which are located closest to said user equipment as handover candidates.

7. The method of claim 1, wherein said step of correlating comprises:
correlating said primary scrambling code identifier detected by said user equipment with said primary scrambling code identifiers stored for that user equipment to identify that femto base station having a matching primary scrambling code which is identified as a neighbour to that femto base station most recently visited by said user equipment as a handover candidate.

8. The method of claim 1, wherein said step of correlating comprises:
setting said neighbour area in proportion to said time elapsed.

9. The method of claim 8, wherein said step of correlating comprises:
setting said neighbour area in proportion to a time elapsed between each previous visit to a femto base station for that user equipment indicated by said location history information.

10. A computer program product operable, when executed on a computer, to perform the method steps of any one of claims 1 to 9.

11. A femto base station gateway, comprising:
storage operable to store location history information identifying femto base stations previously visited by user equipment, said location history information comprising a primary scrambling code identifier, a unique identifier for each femto base station which identifies those femto base stations previously visited by user equipment; and femto base station neighbour information providing an indication of femto base station neighbours;
reception logic operable to receive an indicator from user equipment identifying a detected femto base station as a handover target, said indicator comprising a primary scrambling code identifier detected by said user equipment; and
correlation logic operable to correlate said primary scrambling code identifier detected by said user equipment with said primary scrambling code identifiers stored for said user equipment to identify as handover candidates those femto base stations having a matching primary scrambling code which are indicated by said femto base station neighbour information as being within a neighbour area determined based on a time elapsed between receiving said indicator and when said user equipment has previously visited a most recently visited femto base station.

## Patentansprüche

1. Verfahren zum Identifizieren von Femto-Basistation-Weiterreichungszielen (30) für Teilnehmergeräte (34) in einem drahtlosen Kommunikationsnetzwerk (10), wobei das besagte Verfahren die folgenden Schritte umfasst:
Speichern von Aufenthaltsort-Verlaufsinformationen, welche vorher von einem Teilnehmergerät besuchte Femto-Basisstationen identifizieren, wobei die besagten Aufenthaltsort-Verlaufsinformationen die Kennung eines primären Verwürfelungscodes, eine eindeutige Kennung für jede Femto-Basisstation, welche diejenigen Femto-Basisstationen identifiziert, die vorher von dem Teilnehmergerät besucht worden sind, und Informationen über Femto-Basisstations-Nachbarn, welche eine Angabe über Femto-Basisstations-Nachbarn bereitstellen, umfassen;
Empfangen eines Indikators von dem Teilnehmergerät, welcher eine erkannte Femto-Basisstation als ein Weiterreichungsziel identifiziert, wobei der besagte Indikator eine von dem besagten Teilnehmergerät erkannte Kennung des primären Verwürfelungscodes umfasst; und
Korrelieren der besagten von dem besagten Teilnehmergerät erkannten Kennung des primären Verwürfelungscodes mit den besagten für das besagte Teilnehmergerät gespeicherten Kennungen des primären Verwürfelungscodes, um als Weiterreichungskandidaten diejenigen Femto-Basisstationen, die einen übereinstimmenden primären Verwürfelungscode aufweisen und anhand der besagten Femto-Basisstatipn-Nachbarinformationen als sich in einem auf der Basis einer zwischen dem Empfang des besagten Indikators und dem Zeitpunkt, an welchem das besagte Teilnehmergerät vorher eine zuletzt besuchte Femto-Basisstation besucht hat, vergangenen Zeit bestimmten Nachbarbereich befindend angegeben werden, zu identifizieren.

2. Verfahren nach Anspruch 1, wobei die besagten Aufenthaltsort-Verlaufsinformationen eine Angabe darüber enthalten, wie oft das Teilnehmergerät vorher Femto-Basisstationen besucht hat, und wobei der besagte Schritt des Korrelierens umfasst:
Korrelieren der besagten von dem besagten Teilnehmergerät erkannten Kennung des primären Verwürfelungscodes gegen die besagten in den besagten Aufenthaltsort-Verlaufsinformationen für das besagte Teilnehmergerät gespeicherten Kennungen des primären Verwürfelungscodes, um diejenigen Femto-Basisstationen, welche einen übereinstimmenden primären Verwürfelungscode aufweisen und am öftesten als Weiterreichungskandidaten besucht worden sind, zu identifzieren.

3. Verfahren nach Anspruch 2, wobei der besagte Schritt des Korrelierens umfasst:
Korrelieren der besagten von dem besagten Teilnehmergerät erkannten Kennung des primären Verwürfelungscodes gegen die besagten in den besagten Aufenthaltsort-Verlaufsinformationen für das besagte Teilnehmergerät gespeicherten Kennungen des primären Verwürfelungscodes, um diejenige Femto-Basisstation, welche einen übereinstimmenden primären Verwürfelungscode aufweist und am öftesten als Weiterreichungskandidaten besucht worden ist, zu identifizieren.

4. Verfahren nach einem beliebigen der vorstehenden Ansprüche, wobei die besagten Aufenthaltsort-Verlaufsinformationen eine Angabe darüber, wann das Teilnehmergerät vorher Femto-Basisstationen besucht hat, umfassen und der besagte Schritt des Korrelierens umfasst.
Korrelieren der besagten von dem besagten Teilnehmergerät erkannten Kennung des primären Verwürfelungscodes gegen die besagten in den besagten Aufenthaltsort-Verlaufsinformationen für das besagte Teilnehmergerät gespeicherten Kennungen des primären Verwürfelungscodes, um diejenigen Femto-Basisstationen, welche einen übereinstimmenden primären Verwürfelungscode aufweisen und zuletzt als Weiterreichungskandidaten besucht worden sind, zu identifizieren.

5. Verfahren nach Anspruch 4, wobei der besagte Schritt des Korrelierens umfasst:
Korrelieren der besagten von dem besagten Teilnehmergerät erkannten Kennung des primären Verwürfelungscodes gegen die besagten in den besagten Aufenthaltsort-Verlaufsinformationen für das besagte Teilnehmergerät gespeicherten Kennungen des primären Verwürfelungscodes, um diejenige Femto-Basisstation, welche einen übereinstimmenden primären Verwürfelungscode aufweist und zuletzt als Weiterreichungskandidaten besucht worden ist, zu identifizieren.

6. Verfahren nach einem beliebigen der vorstehenden Ansprüche, wobei die besagten Aufenthaltsort-Verlaufsinformationen Femto-Basisstationstopologie-Informationen, welche eine Angabe über Aufenthaltsortsbeziehungen zwischen Femto-Basisstationen geben, umfassen und der besagte Schritt des Korrelierens umfasst:
Korrelieren der besagten von dem besagten Tellnehmergerät erkannten Kennung des primären Verwürfelungscodes mit den besagten in den besagten Aufenthaltsort-Verlaufsinformationen für das besagte Teilnehmergerät gespeicherten Kennungen des primären Verwürfelungscodes, um diejenigen Femto-Basisstationen, welche einen übereinstimmenden primären Verwürfelungscode aufweisen und dem besagten Teilnehmergerät am nächsten liegen, als Weiterreichungskandidaten zu identifizieren.

7. Verfahren nach Anspruch 1, wobei der besagte Schritt des Korrelierens umfasst:
Korrelieren der besagten von dem besagten Teilnehmergerät erkannten Kennung des primären Verwürfelungscodes mit den besagten in den besagten Aufenthaltsort-Verlaufsinformationen für das besagte Teilnehmergerät gespeicherten Kennungen des primären Verwürfelungscodes, um diejenige Femto-Basisstation, welche einen übereinstimmenden primären Verwürfelungscode aufweist und als ein Nachbar derjenigen Femto-Basisstation, die am öftesten von dem besagten Teilnehmergerät als Weiterreichungskandidaten besucht worden ist, identifiziert wurde, zu identifizieren.

8. Verfahren nach Anspruch 1, wobei der besagte Schritt des Korrelierens umfasst:
Festlegen des besagten Nachbarbereichs im Verhältnis zu der besagten vergangenen Zeit.

9. Verfahren nach Anspruch 8, wobei der besagte Schritt des Korrelierens umfasst:
Festlegen des besagten Nachbarbereichs im Verhältnis zu einer zwischen jedem vorherigen Besuch an einer Femto-Basisstation für das besagte Teilnehmerendgerät vergangenen Zeit, welche in den besagten Aufenthaltsort-Verlaufsinformationen angegeben wird.

10. Computerprogramm-Produkt, welches bei dessen Ausführung auf einem Computer betriebsfähig ist, um die Schritte des Verfahrens gemäß einem beliebigen der Ansprüche 1 bis 9 durchzuführen.

11. Femto-Basistations-Gateway, umfassend:
Einen Speicher, welcher betriebsfähig ist, um Aufenthaltsort-Verlaufsinformationen, welche vorher von dem Teilnehmergerät besuchte Femto-Basisstationen identifizieren, zu speichern, wobei die besagten Aufenthaltsort-Verlaufsinformationen die Kennung eines primären Verwürfelungscodes, eine eindeutige Kennung für jede Femto-Basisstation, welche diejenigen Femto-Basisstationen identifiziert, die vorher von dem Teilnehmergerät besucht worden sind, und Informationen über Femto-Basisstations-Nachbarn, welche eine Angabe über Femto-Basisstations-Nachbarn bereitstellen, umfassen;
eine Empfangslogik, welche betriebsfähig ist, um einen Indikator von einem Teilnehmergerät zu empfangen, welcher eine erkannte Femto-Basisstation als ein Weiterreichungsziel identifiziert, wobei der besagte Indikator die Kennung eines von dem besagten Teilnehmergerät erkannten primären Verwürfelungscodes umfasst; und
eine Korrelationslogik, welche betriebsfähig ist, um die besagte von dem besagten Teilnehmergerät erkannte Kennung des primären Verwürfelungscodes mit den besagten für das besagte Teilnehmergerät gespeicherten Kennungen des primären Verwürfelungscodes zu korrelieren, um als Weiterreichungskandidaten diejenigen Femto-Basisstationen zu identifizieren, die einen übereinstimmenden primären Verwürfelungscode aufweisen und anhand der besagten Femto-Basisstations-NachbarInformationen als sich in einem Nachbarbereich, welcher auf der Basis einer zwischen dem Empfang des besagten Indikators und dem Zeitpunkt, an dem das besagte Teilnehmergerät vorher eine zuletzt besuchte Femto-Basisstation besucht hat, vergangenen Zeit bestimmt wird, aufhaltend angegeben werden.

## Revendications

1. Procédé d'identification des destinations (30) de transfert d'une femtostation de base pour un équipement d'utilisateur (34) dans un réseau de communications sans fil (10), ledit procédé comprenant les étapes suivantes :
Stockage d'informations d'historique d'emplacement identifiant les femtostations de base visitées précédemment par l'équipement d'utilisateur, lesdites informations d'historique d'emplacement comprenant un identifiant de code de brouillage primaire, un identifiant unique pour chaque femtostation de base qui identifie les femtostations de base visitées précédemment par l'équipement d'utilisateur et des informations de voisin de femtostation de base fournissant une indication sur les voisins de la femtostation de base ;
Réception d'un indicateur de la part de l'équipement d'utilisateur identifiant une femtostation de base détectée en tant que destination du transfert, ledit indicateur comprenant un identifiant de code de brouillage primaire détecté par ledit équipement d'utilisateur; et
Corrélation dudit identifiant de code de brouillage primaire détecté par ledit équipement d'utilisateur avec lesdits identifiants de code de brouillage primaire stockés pour ledit équipement d'utilisateur afin d'identifier comme candidates au transfert les femtostations de base ayant un code de brouillage primaire concordant qui sont indiquées par lesdites informations de voisin de femtostation de base comme se trouvant dans une zone voisine déterminée en se basant sur un temps écoulé entre la réception dudit indicateur et le moment où ledit équipement d'utilisateur a visité précédemment une femtostation de base visitée plus récemment.

2. Procédé selon la revendication 1, selon lequel lesdites informations d'historique d'emplacement comprennent une indication de la fréquence des visites précédentes par l'équipement d'utilisateur des femtostations de base et ladite étape de corrélation comprend :
Corrélation dudit identifiant de code de brouillage primaire détecté par ledit équipement d'utilisateur par rapport auxdits identifiants de code de brouillage primaire stockés dans lesdites informations d'historique d'emplacement pour cet équipement d'utilisateur afin d'identifier les femtostations de base possédant un code de brouillage primaire concordant qui ont été visitées le plus souvent en tant que candidates au transfert

3. Procédé selon la revendication 2, selon lequel ladite étape de corrélation comprend :
Corrélation dudit identifiant de code de brouillage primaire détecté par ledit équipement d'utilisateur par rapport auxdits identifiants de code de brouillage primaire stockés dans lesdites informations d'historique d'emplacement pour cet équipement d'utilisateur afin d'identifier la femtostation de base possédant un code de brouillage primaire concordant qui a été visitée le plus souvent en tant que candidate au transfert.

4. Procédé selon l'une quelconque des revendications précédentes, selon lequel lesdites informations d'historique d'emplacement comprennent une indication des moments des visites précédentes par l'équipement d'utilisateur des femtostations de base et ladite étape de corrélation comprend :
Corrélation dudit identifiant de code de brouillage primaire détecté par ledit équipement d'utilisateur par rapport auxdits identifants de code de brouillage primaire stockés dans lesdites informations d'historique d'emplacement pour cet équipement d'utilisateur afin d'identifier les femtostations de base possédant un code de brouillage primaire concordant qui ont été visitées le plus récemment en tant que candidates au transfert.

5. Procédé selon la revendication 4, selon lequel ladite étape de corrélation comprend :
Corrélation dudit identifant de code de brouillage primaire détecté par ledit équipement d'utilisateur par rapport auxdits identifiants de code de brouillage primaire stockés dans lesdites informations d'historique d'emplacement pour cet équipement d'utilisateur afin d'identifier la femtostation de base possédant un code de brouillage primaire concordant qui a été visitée le plus récemment en tant que candidate au transfert.

6. Procédé selon l'une quelconque des revendications précédentes, selon lequel lesdites informations d'historique d'emplacement comprennent des informations de topologie de femtostation de base fournissant une indication des relations d'emplacement entre les femtostations de base et ladite étape de corrélation comprend :
Corrélation dudit identifiant de code de brouillage primaire détecté par ledit équipement d'utilisateur avec lesdits identifiants de code de brouillage primaire stockés dans lesdites informations d'historique d'emplacement pour cet équipement d'utilisateur afin d'identifer les femtostations de base possédant un code de brouillage primaire concordant qui se trouvent le plus près dudit équipement d'utilisateur en tant que candidates au transfert.

7. Procédé selon la revendication 1, selon lequel ladite étape de corrélation comprend :
Corrélation dudit identifiant de code de brouillage primaire détecté par ledit équipement d'utilisateur avec lesdits identifiants de code de brouillage primaire stockés pour cet équipement d'utilisateur afin d'identifier la femtostation de base possédant un code de brouillage primaire concordant qui est identifiée comme une voisine de la femtostation de base visitée le plus récemment par ledit équipement d'utilisateur en tant que candidate au transfert.

8. Procédé selon la revendication 1, selon lequel ladite étape de corrélation comprend :
Définition de ladite zone voisine proportionnellement audit temps écoulé.

9. Procédé selon la revendication 8, selon lequel ladite étape de corrélation comprend :
Définition de ladite zone voisine proportionnellement à un temps écoulé entre chaque visite précédente à une femtostation de base par l'équipement d'utilisateur indiqué par lesdites informations d'historique d'emplacement.

10. Produit de programme informatique pouvant être utilisé, lorsqu'il est exécuté sur un ordinateur, pour exécuter les étapes du procédé selon l'une quelconque des revendications 1 à 9.

11. Passerelle de femtostation de base comprenant :
un dispositif de stockage pouvant être utilisé pour stocker des informations d'historique d'emplacement identifiant les femtostations de base visitées précédemment par l'équipement d'utilisateur, lesdites informations d'historique d'emplacement comprenant un identifiant de code de brouillage primaire, un identifiant unique pour chaque femtostation de base qui identifie les femtostations de base visitées précédemment par l'équipement d'utilisateur et des informations de voisin de femtostation de base fournissant une indication sur les voisins de la femtostation de base ;
une logique de réception pouvant être utilisée pour recevoir un indicateur de la part de l'équipement d'utilisateur identifiant une femtostation de base détectée en tant que destination du transfert, ledit indicateur comprenant un identifiant de code de brouillage primaire détecté par ledit équipement d'utilisateur ; et
une logique de corrélation pouvant être utilisée pour corréler ledit identifiant de code de brouillage primaire détecté par ledit équipement d'utilisateur avec lesdits identifiants de code de brouillage primaire stockés pour ledit équipement d'utilisateur afin d'identifier comme candidates au transfert les femtostations de base ayant un code de brouillage primaire concordant qui sont indiquées par lesdites informations de voisin de femtostation de base comme se trouvant dans une zone voisine déterminée en se basant sur un temps écoulé entre la réception dudit indicateur et le moment où ledit équipement d'utilisateur a visité précédemment une femtostation de base visitée plus récemment.
